# FASCICULE DE BREVET EUROPEEN

(11) **EP 3 446 845 B1**
(45) Date de publication et mention de la délivrance du brevet: **28.10.2020**
(21) Numéro de dépôt: 18200568.6
(22) Date de dépôt: 11.02.2015
(51) Int. Cl.: B29B 15/12, B29C 70/50, B29K 101/12

(54) **PROCEDE DE FABRICATION D'UN MATERIAU FIBREUX PRE-IMPREGNE DE POLYMERE THERMOPLASTIQUE EN LIT FLUIDISE**
HERSTELLUNGSVERFAHREN EINES FASERMATERIALS, DAS MIT THERMOPLASTISCHEM POLYMER IN EINER WIRBELSCHICHT VORIMPRÄGNIERT IST
METHOD FOR PRODUCING A FIBROUS MATERIAL PRE-IMPREGNATED WITH THERMOPLASTIC POLYMER IN A FLUIDISED BED

(30) Priorité: 13.02.2014 FR 1451137
(43) Date de publication de la demande: 27.02.2019
(62) Demande divisionnaire de: 15709241.2
(73) Titulaire: Arkema France, 92700 Colombes (FR)
(72) Inventeur: GAILLARD, Patrice, 64370 HAGETAUBIN (FR); HOCHSTETTER, Gilles, 94240 L'HAY-LES-ROSES (FR); SAVART, Thibaut, 64170 LCQ (FR)
(74) Mandataire: A.P.I. Conseil

(56) Documents cités:
- EP-A1- 2 586 585
- WO-A1-92/20521
- WO-A1-2015/159021
- WO-A2-2008/135663
- FR-A1- 2 967 371

## Description

### [Domaine de l'invention]

La présente invention concerne un procédé de fabrication d'un matériau fibreux pré-imprégné de polymère thermoplastique.

Plus particulièrement, l'invention se rapporte à un procédé de fabrication d'un matériau fibreux pré-imprégné comprenant une étape d'imprégnation suivie d'une étape de mise en forme pour l'obtention de rubans de matériau fibreux pré-imprégné, de dimensions calibrées, directement utilisables pour la fabrication de pièces composites tridimensionnelles.

Dans la présente description, on entend par « matériau fibreux » un assemblage de fibres de renfort. Avant sa mise en forme, il se présente sous forme de mèches. Après sa mise en forme, il se présente sous forme de bandes, ou de nappes, ou de morceaux. Lorsque les fibres de renfort sont continues, leur assemblage constitue un tissu. Lorsque les fibres sont courtes, leur assemblage constitue un feutre ou un non tissé.

Les fibres pouvant entrer dans la composition du matériau fibreux sont plus spécialement des fibres de carbone, des fibres de verre, des fibres de basalte, des fibres de carbure de silicium, des fibres à base de polymères, des fibres végétales, ou des fibres cellulosiques utilisées seules ou en mélange.

De tels matériaux fibreux pré-imprégnés sont notamment destinés à la réalisation de matériaux composites légers pour la fabrication de pièces mécaniques ayant une structure à trois dimensions et possédant des propriétés de bonne résistance mécanique, thermique et capables d'évacuer des charges électrostatiques, c'est-à-dire des propriétés compatibles avec la fabrication de pièces notamment dans les domaines de la mécanique, de l'aéronautique et nautique, de l'automobile, de l'énergie, de la santé et du médical, de l'armée et de l'armement, des sports et loisirs, et de l'électronique.

De tels matériaux fibreux pré-imprégnés sont également appelés matériaux composites. Ils comprennent le matériau fibreux, constitué des fibres de renfort, et d'une matrice constituée par le polymère d'imprégnation. Le premier rôle de cette matrice est de maintenir les fibres de renfort dans une forme compacte et de donner la forme voulue au produit final. Une telle matrice sert entre autres à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage.

### [Art antérieur]

Une bonne qualité des pièces composites tridimensionnelles fabriquées à partir de matériaux fibreux pré-imprégnés passe par conséquent par une maîtrise d'une part du procédé d'imprégnation des fibres de renfort par le polymère thermoplastique et d'autre part du procédé de mise en forme du matériau fibreux pré-imprégné sous forme de produit semi-fini.

Dans la présente description, on utilise le terme « bande » pour désigner des bandes de matériau fibreux dont la largeur est supérieure ou égale à 100mm. On utilise le terme « ruban » pour désigner des rubans de largeur calibrée et inférieure ou égale à 100mm.

Jusqu'à présent, la fabrication de bandes de matériaux fibreux renforcées par imprégnation de polymère thermoplastique ou de polymère thermodurcissable s'effectuait suivant plusieurs procédés qui dépendent notamment de la nature du polymère, du type de matériau composite final souhaité et de son domaine d'applications. Les technologies de dépôt de poudre ou d'extrusion de polymère fondu sont utilisées pour imprégner les fibres de renfort par des polymères thermodurcissables, comme les résines époxy par exemple, tel que décrit dans le brevet WO2012/066241 A2. Ces technologies ne sont généralement pas applicables directement à l'imprégnation par des polymères thermoplastiques, en particulier ceux à haute température de fusion qui ont une viscosité à l'état fondu trop importante pour obtenir une imprégnation satisfaisante des fibres et des produits semi-finis ou finis de bonne qualité.

Un autre procédé connu d'imprégnation est le passage en continu des fibres dans une dispersion aqueuse de poudre polymérique ou dispersion aqueuse de particules de polymère ou émulsion ou suspension aqueuse de polymère. On peut par exemple se référer au document EP0324680. On utilise dans ce procédé une dispersion de poudres de taille micrométrique (environ 20 µm). Après trempage dans la solution aqueuse, les fibres sont imprégnées par la poudre polymérique. Le procédé implique alors une étape de séchage consistant à faire passer les fibres imprégnées dans un premier four afin d'évaporer l'eau absorbée pendant le trempage. Une étape de traitement thermique, consistant à faire passer les fibres imprégnées et séchées dans une seconde zone de chauffage, à haute température, est ensuite nécessaire pour fondre le polymère afin qu'il adhère, se répartisse et recouvre les fibres.

Le principal inconvénient de cette méthode est l'homogénéité du dépôt qui est souvent imparfaite. Un autre problème lié à ce procédé est la forte porosité induite par la mauvaise répartition du polymère au sein des fibres, qui peut persister après l'étape de traitement thermique, entrainant par conséquent l'apparition d'un grand nombre de défauts dans le matériau fibreux pré-imprégné. Le matériau fibreux pré-imprégné nécessite ensuite d'être mis en forme sous forme de rubans par exemple. La technique de mise en forme peut en outre altérer encore le matériau et le fragiliser encore plus du fait de la présence de ces défauts.

Des sociétés commercialisent des bandes de matériaux fibreux obtenues par une méthode d'imprégnation de fibres unidirectionnelles par passage des fibres, en continu, dans un bain fondu de polymère thermoplastique contenant un solvant organique tel que la benzophénone. On peut par exemple se référer au document US 4 541 884 de l'Impérial Chemical Industries. La présence du solvant organique permet notamment d'adapter la viscosité du mélange fondu et d'assurer une bonne enduction des fibres. Les fibres ainsi pré-imprégnées sont ensuite mises en forme. Elles peuvent par exemple être découpées en bandes de différentes largeurs puis disposées sous une presse, puis chauffées à une température supérieure à la température de fusion du polymère pour assurer la cohésion du matériau et notamment l'adhérence du polymère sur les fibres. Cette méthode d'imprégnation et de mise en forme permet de réaliser des pièces de structure à haute tenue mécanique.

Un des inconvénients de cette technique réside dans la température de chauffe nécessaire à l'obtention de ces matériaux. La température de fusion des polymères dépend notamment de leur nature chimique. Elle peut être relativement élevée pour des polymères de type poly(méthacrylate de méthyle) (PMMA), voire très élevée pour des polymères de type poly(sulfure de phénylène) (PPS), poly(éther éther cétone) (PEEK) ou poly(éther cétone cétone) (PEKK) par exemple. La température de chauffe peut donc monter à des températures supérieures à 250°C, et même supérieures à 350°C, températures qui sont très supérieures à la température d'ébullition et au point éclair du solvant, qui sont respectivement de 305°C et 150°C pour la benzophénone. Dans ce cas, on assiste à un départ brusque du solvant induisant une forte porosité au sein des fibres et provoquant par conséquent l'apparition de défauts dans le matériau composite. Le procédé est donc difficilement reproductible et implique des risques d'explosion mettant en danger les opérateurs. Enfin, l'utilisation de solvants organiques est à éviter pour des raisons environnementales et d'hygiène et sécurité des opérateurs.

Le document EP 0 406 067, déposé aux noms conjoints d'Atochem et de l'Etat Français, ainsi que le document EP0 201 367 décrivent quant à eux une technique d'imprégnation sur lit fluidisé de poudre de polymère. Les fibres pénètrent dans une cuve de fluidisation fermée où elles sont éventuellement séparées les unes des autres au moyen de galets ou de cylindres cannelés, les fibres se chargeant électrostatiquement, par frottement au contact de ces galets ou cylindres. Cette charge électrostatique permet à la poudre de polymère de se coller en surface des fibres et ainsi de les imprégner.

Le document WO2008/135663 décrit, dans une troisième variante, la réalisation d'un ruban de fibres imprégné. Dans ce document, le ruban de fibres est déjà préformé préalablement à l'étape d'imprégnation, sous forme d'un ruban formé de fibres maintenues ensembles par des moyens de contention. Le ruban ainsi préformé est préalablement chargé en électricité statique et plongé dans une enceinte contenant un lit fluidisé de fines particules de polymère en suspension dans l'air comprimé, de manière à revêtir le ruban d'une couche de revêtement polymère. Un tel document ne permet pas de réaliser une imprégnation d'une ou plusieurs mèches de fibres en simultané ni une mise en forme, en continu, des mèches pré-imprégnées sous forme de rubans.

Le document EP2586585 décrit lui aussi le principe d'imprégner des fibres en les passant dans un lit fluidisé de particules de polymère. En revanche, il ne décrit pas une mise en forme en continu d'une ou plusieurs mèches ainsi imprégnées, sous forme d'un ou plusieurs rubans parallèles unidirectionnels.

Le document EP0335186 décrit la possibilité d'utiliser une calandre ou une presse pour compacter un composite comprenant des fibres métalliques pré-imprégnées, utilisé pour la fabrication de corps moulé pour le blindage contre le rayonnement électromagnétique. Il ne décrit pas le fait d'imprégner une ou plusieurs mèches de fibres et de les mettre en forme, en continu, sous forme d'un ou plusieurs rubans parallèles unidirectionnels par calandrage à chaud.

Concernant la mise en forme des matériaux fibreux pré-imprégnés sous forme de rubans calibrés, adaptés à la fabrication de pièces composites tridimensionnelles par dépose automatique au moyen d'un robot, celle-ci est en général réalisée en post-traitement.

Ainsi, le document WO92/20521 décrit la possibilité d'imprégner une mèche de fibres en la passant dans un lit fluidisé de particules de poudre thermoplastique. Les fibres ainsi recouvertes de particules de polymère sont chauffées dans un four ou un dispositif de chauffage pour que le polymère pénètre bien et recouvre les fibres. Un post-traitement du renfort fibreux pré-imprégné obtenu, peut consister à le faire passer dans un ensemble de rouleau de polissage permettant d'améliorer l'imprégnation par la matrice encore liquide. Un ou plusieurs renforts fibreux superposés peuvent en outre être placés entre deux rouleaux de manière à former une bande. Un tel document ne permet pas de réaliser une imprégnation d'une ou plusieurs mèches de fibres et une mise en forme, en continu, des mèches pré-imprégnées sous forme d'un ou plusieurs rubans parallèles unidirectionnels.

La qualité des rubans de matériau fibreux pré-imprégné, et donc la qualité du matériau composite final, dépend non seulement de l'homogénéité de l'imprégnation des fibres et donc du contrôle et de la reproductibilité de la porosité du matériau fibreux pré-imprégné, mais également de la dimension et plus particulièrement de la largeur et de l'épaisseur des rubans finaux. Une régularité et un contrôle de ces deux paramètres dimensionnels permettent en effet d'améliorer la tenue mécanique des matériaux.

Actuellement, quel que soit le procédé utilisé pour l'imprégnation des matériaux fibreux, la fabrication de rubans de faible largeur, c'est-à-dire de largeur inférieure à 100mm, nécessite généralement une refente (c'est-à-dire une découpe) de bandes de largeur supérieure à 500 mm, encore dénommées nappes. Les rubans ainsi dimensionnés sont ensuite repris pour être déposés par un robot à l'aide d'une tête.

En outre, les rouleaux de nappes ne dépassant pas une longueur de l'ordre de 1 km, les rubans obtenus après découpe ne sont en général pas suffisamment longs pour fabriquer certains matériaux de taille importante lors de la dépose par robot. Les rubans doivent donc être raboutés pour obtenir une longueur plus importante, créant alors des surépaisseurs. Ces surépaisseurs entrainent l'apparition d'hétérogénéités qui sont préjudiciables à l'obtention de matériaux composites de bonne qualité.

Les techniques actuelles d'imprégnation de matériaux fibreux et de mise en forme de tels matériaux fibreux pré-imprégnés sous forme de rubans calibrés présentent donc plusieurs inconvénients. Il est par exemple difficile de chauffer de manière homogène un mélange fondu de polymères thermoplastiques dans une filière et en sortie de filière, jusqu'au cœur du matériau, ce qui altère la qualité de l'imprégnation. De plus, la différence de température existante entre les fibres et un mélange fondu de polymères au niveau de la filière d'imprégnation altère également la qualité et l'homogénéité de l'imprégnation. L'utilisation de solvants organiques implique généralement l'apparition de défauts dans le matériau ainsi que des risques environnementaux, de santé et de sécurité en général. La mise en forme, par post-traitement à haute température du matériau fibreux pré-imprégné sous forme de bandes, reste difficile car elle ne permet pas toujours une répartition homogène du polymère au sein des fibres ce qui entraine l'obtention d'un matériau de moindre qualité, avec une porosité mal contrôlée. Le refendage de nappes pour l'obtention de rubans calibrés et le raboutage de ces rubans induit un coût supplémentaire de fabrication. Le refendage génère en outre des problèmes importants de poussières qui polluent les rubans de matériaux fibreux pré-imprégnés utilisés pour la dépose robot et peuvent entrainer des dysfonctionnements des robots et/ou des imperfections sur les composites. Ceci entraine potentiellement des coûts de réparation des robots, un arrêt de la production et la mise au rebut des produits non conformes. Enfin, lors de l'étape de refendage, une quantité non négligeable de fibres est détériorée, induisant une perte de propriétés, et notamment une réduction de la résistance mécanique et de la conductivité, des rubans de matériau fibreux pré-imprégné.

### [Problème technique]

L'invention a donc pour but de remédier à au moins un des inconvénients de l'art antérieur. L'invention vise notamment à proposer un procédé de fabrication d'un matériau fibreux pré-imprégné, associant une technique d'imprégnation et une technique de mise en forme en continu, afin d'éviter toute étape de post-traitement du matériau fibreux, et d'obtenir un matériau fibreux pré-imprégné présentant une imprégnation homogène et à coeur des fibres et des dimensions contrôlées, avec une porosité contrôlée et reproductible dont dépendent les performances de la pièce composite finale.

### [Brève description de l'invention]

A cet effet, l'invention a pour objet un procédé de fabrication d'un matériau fibreux pré-imprégné comprenant un matériau fibreux en fibres continues et une matrice polymère thermoplastique, caractérisé en ce que ledit matériau fibreux pré-imprégné est réalisé en une pluralité de rubans parallèles unidirectionnels et en ce que ledit procédé comprend les étapes suivantes :
i. imprégnation dudit matériau fibreux se présentant sous forme de plusieurs mèches parallèles et sans contact les unes avec les autres, par ledit polymère thermoplastique ou un mélange de polymères thermoplastiques se présentant sous forme d'une poudre en lit fluidisé, ledit polymère thermoplastique ou mélange de polymères thermoplastiques comprenant en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges ;
ii. mise en forme desdites mèches parallèles dudit matériau fibreux imprégné selon l'étape i), par calandrage au moyen d'au moins une calandre chauffante sous forme d'une pluralité de rubans parallèles unidirectionnels avec ladite calandre chauffante comportant une pluralité de gorges de calandrage, de préférence jusqu'à 200 gorges de calandrage, en conformité avec le nombre desdits rubans et comprenant en outre un système de chauffage intégré par induction ou par microondes, de préférence par microondes, couplé à la présence de charges carbonées dans ledit polymère thermoplastique ou mélange de polymères thermoplastiques, et avec une pression et/ou un écartement entre les rouleaux de ladite calandre régulé par un système asservi.

Ainsi, le calandrage à chaud de la ou des mèches pré-imprégnées, juste en aval du dispositif d'imprégnation en continu, par lit fluidisé, permet d'homogénéiser la répartition du polymère et l'imprégnation au cœur des fibres, de contrôler et de réduire le taux de porosités au sein du matériau fibreux pré-imprégné, et d'obtenir un ou plusieurs rubans de grande longueur et de largeur et d'épaisseur calibrées. Le procédé selon l'invention permet donc d'éviter l'utilisation de polymère fondu, de viscosité trop importante, l'utilisation préjudiciable de solvants organiques, et il permet également de mettre en forme des rubans de dimensions calibrées sans avoir recours à une étape de refendage et de raboutage.

Selon d'autres caractéristiques optionnelles du procédé :
- ladite étape d'imprégnation i) est complétée par une étape de recouvrement de ladite pluralité de mèches parallèles après imprégnation par la poudre selon l'étape i), par un polymère thermoplastique fondu, pouvant être identique ou différent dudit polymère sous forme de poudre en lit fluidisé, ladite étape de recouvrement étant réalisée avant ladite étape de calandrage ii), ledit polymère fondu étant de préférence de même nature que ledit polymère sous forme de poudre en lit fluidisé, de préférence avec ledit recouvrement s'effectuant par extrusion en tête d'équerre par rapport à ladite pluralité de mèches parallèles,
- le polymère thermoplastique ou mélange de polymères thermoplastiques comprend en outre des polymères à cristaux liquides ou du poly(butylène téréphtalate) cyclisé, ou des mélanges en contenant, comme additif,
- ledit polymère, ou mélange de polymères thermoplastiques, est sélectionné parmi des polymères amorphes dont la température de transition vitreuse est telle que Tg≥ 80°C et/ou parmi des polymères semi-cristallins dont la température de fusion Tf est ≥ 150°C,
- le polymère thermoplastique ou mélange de polymères thermoplastiques est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides aromatiques éventuellement modifiées par unités urées ; les polyacrylates en particulier le polyméthacrylate de méthyle (PMMA) ;; ou les polymères fluorés en particulier le polyfluorure de vinylidène (PVDF) ; et leurs mélanges,
- ledit matériau fibreux comprend des fibres continues sélectionnées parmi les fibres de carbone, de verre, de carbure de silicium, de basalte, de silice, les fibres naturelles en particulier de lin ou de chanvre, de sisal, de soie, ou cellulosiques en particulier de viscose, ou les fibres thermoplastiques de température de transition vitreuse Tg supérieure à la Tg dudit polymère ou dudit mélange de polymères lorsque ce-dernier est amorphe ou de température de fusion Tf supérieure à la Tf dudit polymère ou dudit mélange de polymères lorsque ce-dernier est semi-cristallin, ou un mélange de deux ou de plusieurs desdites fibres, de préférence un mélange de fibres de carbone, de verre ou de carbure de silicium, en particulier des fibres de carbone,
- le taux en volume dudit polymère ou mélange de polymères par rapport audit matériau fibreux varie de 40 à 250% de préférence de 45 à 125 % et plus préférentiellement de 45 à 80%,
- le taux en volume dudit polymère ou dudit mélange de polymères par rapport audit matériau fibreux varie de 0,2 et 15 %, de préférence entre 0,2 et 10% et plus préférentiellement de 0,2 et 5%,
- l'étape de calandrage ii) est réalisée au moyen d'une pluralité de calandres chauffantes,
- ladite (ou lesdites) calandre(s) chauffante(s) de l'étape ii) est (sont) couplée(s) à un dispositif de chauffage complémentaire rapide, situé avant et/ou après ladite (chaque) calandre, en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme.

La divulgation se rapporte également à un ruban unidirectionnel de matériau fibreux pré-imprégné, en particulier ruban enroulé sur bobine, comprenant un matériau fibreux et un polymère thermoplastique ou un mélange de polymèrse thermoplastiques, ledit ruban étant caractérisé en ce qu'il est imprégné et mis en forme en continu conformément au procédé tel que défini ci-dessus.

Selon une caractéristique optionnelle, le ruban a une largeur et une épaisseur adaptées à une dépose par robot dans la fabrication de pièces en trois dimensions, sans besoin de refendage, et de préférence a une largeur d'au moins 5 mm et pouvant aller jusqu'à 100mm, de préférence comprise entre 5 et 50 mm et de manière encore plus préférée comprise entre 5 et 10mm.

La divulgation se rapporte aussi à une utilisation du procédé tel que défini ci-dessus pour la fabrication de rubans calibrés adaptés à la fabrication de pièces composites en trois dimensions par dépose automatique desdits rubans au moyen d'un robot.

La divulgation porte en outre sur une utilisation du ruban tel que défini ci-dessus dans la fabrication de pièces en trois dimensions. Ladite fabrication desdites pièces composites concerne les domaines des transports, en particulier automobile, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la balistique avec pièces pour arme ou missile, de la sécurité et de l'électronique.

La divulgation concerne également une pièce composite en trois dimensions, caractérisée en ce qu'elle résulte de l'utilisation d'au moins un ruban unidirectionnel de matériau fibreux pré-imprégné tel que défini ci-dessus.

L'invention porte également sur une unité de mise en œuvre du procédé de fabrication tel que défini ci-dessus, ladite unité étant caractérisée en ce qu'elle comprend :
a) un dispositif d'imprégnation en continu d'une pluralité de mèches parallèles de matériau fibreux et sans contact les unes avec les autres, comprenant une cuve de lit fluidisé pour polymère en poudre,
b) un dispositif de calandrage en continu desdites mèches parallèles, avec mise en forme, sous forme de plusieurs rubans parallèles unidirectionnels, comprenant :
   b1) au moins une calandre chauffante, en particulier plusieurs calandres chauffantes en série, ladite calandre portant plusieurs gorges de calandrage, et de préférence dans ce dernier cas ayant jusqu'à 200 gorges de calandrage, et comprenant en outre un système de chauffage intégré par induction ou par microondes, de préférence par microondes, couplé à la présence de charges carbonées dans ledit polymère thermoplastique ou mélange de polymères thermoplastiques,
   b2) un système de régulation de la pression et/ou de l'écartement entre rouleaux de calandrage.

Selon d'autres caractéristiques optionnelles de ladite unité :
- ledit dispositif d'imprégnation comprend en plus et à la suite de ladite cuve de lit fluidisé, un dispositif de recouvrement desdites mèches imprégnées selon étape i), par un polymère fondu, de préférence ledit dispositif de recouvrement comprenant un dispositif d'extrusion en tête d'équerre par rapport auxdites mèches parallèles,
- ladite (lesdites) calandre(s) chauffante(s) est (sont) couplée(s) à un dispositif complémentaire de chauffage rapide, situé avant et/ou après ladite (chaque) calandre, ledit dispositif de chauffage rapide étant choisi parmi un dispositif microondes ou d'induction en particulier lorsqu'il est couplé à la présence de charges carbonées, ou un dispositif IR ou Laser ou un autre dispositif permettant un contact direct à la source de chaleur, tel qu'un dispositif à flamme.

D'autres particularités et avantages de l'invention apparaitront à la lecture de la description faite à titre d'exemple illustratif et non limitatif, en référence aux Figures annexées, qui représentent :
- la Figure 1, un schéma d'une unité de mise en œuvre du procédé de fabrication d'un matériau fibreux pré-imprégné selon l'invention,
- la Figure 2, un schéma en coupe de deux rouleaux constitutifs d'une calandre telle qu'utilisée dans l'unité de la Figure 1,
- La Figure 3, une photo prise au microscope électronique à balayage d'une vue en coupe d'une mèche de fibre de verre de 1200 Tex, imprégnée à cœur par une poudre de polyamide PA11 de 100µm, en moyenne,
- La Figure 4, une photo prise au microscope électronique à balayage d'une vue en coupe d'un ruban composite obtenu par calandrage de la mèche de fibres de verre de la Figure 3,
- La Figure 5, une photo prise au microscope électronique à balayage d'une vue en coupe d'un ruban composite obtenu par calandrage d'une mèche de fibres de carbone de 12K, pré-imprégnée par la poudre de polyamide PA11.

### [Description détaillée de l'invention]

### Matrice polymère

On entend par thermoplastique, ou polymère thermoplastique, un matériau généralement solide à température ambiante, pouvant être cristallin, semi-cristallin ou amorphe, et qui se ramollit lors d'une augmentation de température, en particulier après passage de sa température de transition vitreuse (Tg) et s'écoule à plus haute température et pouvant observer une fusion franche au passage de sa température dite de fusion (Tf) (lorsqu'il est semi-cristallin), et qui redevient solide lors d'une diminution de température en dessous de sa température de fusion et en dessous de sa température de transition vitreuse.

Concernant le polymère de constitution de la matrice d'imprégnation du matériau fibreux, c'est avantageusement un polymère thermoplastique ou un mélange de polymères thermoplastiques. Ce polymère ou mélange de polymères thermoplastiques est broyé sous forme de poudre, afin de pouvoir l'utiliser en lit fluidisé. Les particules de poudre présentent un diamètre moyen de préférence inférieur à 125µm, afin de pouvoir pénétrer la ou les mèches de fibres.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée.

Selon une autre variante, le polymère thermoplastique ou mélange de polymères thermoplastiques peut en outre comprendre des additifs, tels que des polymères à cristaux liquides ou du poly(butylène téréphtalate) cyclisé, ou des mélanges en contenant, comme la résine CBT100 commercialisée par la société CYCLICS CORPORATION. Ces additifs permettent notamment de fluidifier la matrice polymère à l'état fondu, pour une meilleure pénétration au cœur des fibres. Selon la nature du polymère, ou mélange de polymères thermoplastiques, utilisé pour réaliser la matrice d'imprégnation, notamment sa température de fusion, on choisira l'un ou l'autre de ces additifs.

De manière avantageuse, le polymère thermoplastique ou mélange de polymères thermoplastique est sélectionné parmi des polymères amorphes dont la température de transition vitreuse est telle que Tg≥ 80°C et/ou parmi des polymères semi-cristallins dont la température de fusion Tf est ≥ 150°C.

Plus particulièrement, les polymères thermoplastiques entrant dans la constitution de la matrice d'imprégnation du matériau fibreux, peuvent être choisis parmi :
- les polymères et copolymères de la famille des polyamides (PA), tels que le le polyamide haute densité, le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10), le polyamide 6.12 (PA-6.12), les polyamides aromatiques, éventuellement modifié par des unités urées, en particulier les polyphtalamides et l'aramide, et les copolymères blocs, notamment polyamide/polyéther,
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones , en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),
- et leurs mélanges.

De préférence les polymères de constitution de la matrice sont choisis parmi les polymères thermoplastiques présentant une température de fusion Tf élevée, à savoir à partir de 150°C et plus, comme les Polyamides (PA), en particulier les polyamides aromatiques éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Pour les polymères fluorés, on peut utiliser un homopolymère du fluorure de vinylidène (VDF de formule CH₂=CF₂) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les polyéther cétones PEK, le poly(éther éther cétone) PEEK, le poly(éther cétone cétone) PEKK, le Poly(éther cétone éther cétone cétone) PEKEKK etc.

### Matériau fibreux :

Concernant les fibres de constitution du matériau fibreux, ce sont notamment des fibres d'origine minérale, organique ou végétale. Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides aromatiques, des fibres d'aramide ou des fibres en polyoléfines par exemple. De préférence, elles sont à base de polymère thermoplastique et présentent une température de transition vitreuse Tg supérieure à la Tg du polymère ou mélange de polymère thermoplastique de constitution de la matrice d'imprégnation lorsque ce-dernier est amorphe, ou une température de fusion Tf supérieure à la Tf du polymère ou mélange de polymère thermoplastique de constitution de la matrice d'imprégnation lorsque ce-dernier est semi-cristallin. Ainsi, il n'y a aucun risque de fusion pour les fibres organiques de constitution du matériau fibreux. Parmi les fibres d'origine végétale, on peut citer les fibres naturelles à base de lin, de chanvre, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique

Ces fibres de constitution peuvent être utilisées seules ou en mélanges. Ainsi, des fibres organiques peuvent être mélangées aux fibres minérales pour être imprégnée de polymère thermoplastique et former le matériau fibreux pré-imprégné.

Les fibres sont au choix monobrin, multibrin ou un mélange des deux, et peuvent avoir plusieurs grammages. Elles peuvent en outre présenter plusieurs géométries. Ainsi, elles peuvent se présenter sous forme de fibres courtes, qui composent alors les feutres ou les non tissés pouvant se présenter sous la forme de bandes, nappes, tresses, mèches ou morceaux, ou sous forme de fibres continues, qui composent les tissus 2D, les fibres ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Selon le ratio volumique de polymère par rapport au matériau fibreux, il est possible de réaliser des matériaux pré-imprégnés dits « prêts à l'emploi » ou des matériaux pré-imprégnés dits « secs ».

Dans les matériaux pré-imprégnés dits « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux pré-imprégné et le fragilisent mécaniquement. Une répartition homogène du polymère ou mélange de polymères améliore donc la tenue mécanique et l'homogénéité du matériau composite formé à partir de ces matériaux fibreux pré-imprégnés.

Ainsi, dans le cas de matériaux pré-imprégnés dits « prêts à l'emploi », le taux en volume du polymère ou mélange de polymères thermoplastiques par rapport au matériau fibreux varie de 40 à 250%, de préférence de 45 à 125 %, et plus préférentiellement de 45 à 80%.

Les matériaux fibreux pré-imprégnés dits « secs », quant à eux, comprennent des porosités entre les fibres et une plus faible quantité de polymère thermoplastique d'imprégnation qui recouvre les fibres en surface pour les maintenir ensemble. Ces matériaux pré-imprégnés « secs » sont adaptés à la fabrication de préformes pour matériaux composites. Ces préformes peuvent ensuite être utilisées pour faire de l'infusion de résine thermoplastique ou de résine thermodurcissable par exemple. Les porosités permettent dans ce cas de faciliter le transport ultérieur de la résine polymère infusée, au sein du matériau fibreux pré-imprégné, afin d'améliorer les propriétés finales du matériau composite et notamment sa cohésion mécanique. Dans ce cas, la présence du polymère thermoplastique d'imprégnation sur le matériau fibreux pré-imprégné dit « sec » permet de rendre compatible la résine d'infusion.

Ainsi, dans le cas de matériaux pré-imprégnés dits « secs », le taux en volume du polymère ou du mélange de polymères par rapport au matériau fibreux varie avantageusement de 0,2 et 15 %, de préférence entre 0,2 et 10% et plus préférentiellement de 0,2 et 5%. Dans ce cas on parle de voile polymère, de faible grammage, déposé sur le matériau fibreux pour maintenir les fibres ensemble.

Le procédé de fabrication d'un matériau fibreux selon l'invention comprend avantageusement deux étapes : une première étape d'imprégnation du matériau fibreux par le polymère thermoplastique, puis une étape de mise en forme du matériau fibreux pré-imprégné sous forme d'un ou plusieurs rubans unidirectionnels dont la largeur et l'épaisseur sont calibrées.

### Etape d'imprégnation :

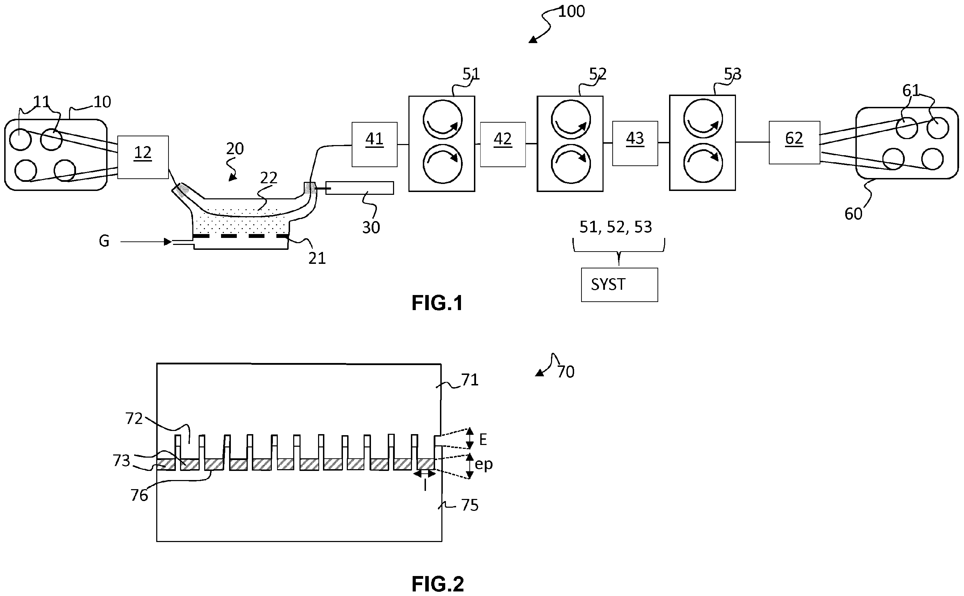

Le procédé de fabrication et l'unité de mise en œuvre de ce procédé sont décrits ci-après, en regard de la Figure 1 qui schématise, de manière très simplifiée, les éléments constitutifs de cette unité 100.

De manière avantageuse, l'étape d'imprégnation du matériau fibreux est réalisée par passage d'une ou plusieurs mèches dans un dispositif d'imprégnation en continu, comprenant une cuve 20 de lit fluidisé de poudre polymérique.

Chaque mèche à imprégner est alors déroulée d'un dispositif 10 à dévidoirs 11 sous la traction engendrée par des cylindres (non représentés). De préférence, le dispositif 10 comprend une pluralité de dévidoirs 11, chaque dévidoir permettant de dérouler une mèche à imprégner. Ainsi, il est possible d'imprégner plusieurs mèches de fibres simultanément. Chaque dévidoir 11 est pourvu d'un frein (non représenté) de manière à appliquer une tension sur chaque mèche de fibres. Dans ce cas, un module d'alignement 12 permet de disposer les mèches de fibres parallèlement les unes par rapport aux autres. De cette manière les mèches de fibres ne peuvent pas être en contact les unes avec les autres, ce qui permet d'éviter une dégradation mécanique des fibres notamment.

La mèche de fibres ou les mèches de fibres parallèles passent alors dans une cuve 20 de lit fluidisé 22, telle que décrite dans le brevet EP0406067. La poudre de polymère(s) est mise en suspension dans un gaz G (de l'air par exemple) introduit dans la cuve et circulant dans la cuve à travers une trémie 21. La ou les mèches sont mises en circulation dans ce lit fluidisé 22. Le diamètre moyen des particules de poudre de polymère dans le lit fluidisé est de préférence inférieur à 125µm, afin de pouvoir pénétrer la ou les mèches de fibres. Cette imprégnation est réalisée afin de permettre une adhésion de la poudre polymérique sur les fibres. La ou les mèches pré-imprégnées par la poudre, ressortent ensuite de la cuve pour se diriger vers un dispositif de calandrage chauffant, avec possibilité de préchauffage avant calandrage et éventuel chauffage post-calandrage.

De manière facultative, cette étape d'imprégnation peut être complétée par une étape de recouvrement de la mèche ou des mèches pré-imprégnées, juste en sortie de la cuve 20 d'imprégnation par la poudre en lit fluidisé 22, et juste avant l'étape de mise en forme par calandrage. Pour cela, le sas de sortie de la cuve 20 de fluidisation (lit fluidisé 22) peut être connecté à un dispositif de recouvrement 30 pouvant comporter une tête d'équerre de recouvrement, comme cela est également décrit dans le brevet EP0406067. Plus particulièrement, ledit dispositif de recouvrement comprend une tête d'équerre approvisionnée en polymère thermoplastique fondu par une extrudeuse 30. Le polymère de recouvrement peut être identique ou différent de la poudre polymère en lit fluidisé. De préférence, il est de même nature. Un tel recouvrement permet non seulement de compléter l'étape d'imprégnation des fibres pour obtenir un taux volumique final de polymère dans la gamme souhaitée, notamment pour l'obtention de matériaux fibreux dits « prêts à l'emploi » de bonne qualité, mais il permet en outre d'améliorer les performances du matériau composite obtenu.

### Etape de mise en forme

Dès sa (leur) sortie de la cuve 20 de fluidisation, la mèche (les mèches parallèles) pré-imprégnées, éventuellement recouverte(s) d'un polymère fondu, est (sont) mise(s) en forme sous forme de ruban unique unidirectionnel ou d'une pluralité de rubans unidirectionnels parallèles, au moyen d'un dispositif de calandrage en continu comprenant une ou plusieurs calandres chauffantes.

Jusqu'à présent le calandrage à chaud ne pouvait pas être envisagé pour une étape de mise en forme mais seulement pour une étape de finition car il ne permettait pas de chauffer à des températures suffisantes, en particulier lorsque le polymère, ou mélange de polymères thermoplastiques, d'imprégnation comprend des polymères à haute température de fusion.

De manière avantageuse, les calandres chauffantes du dispositif de calandrage sont couplées à des moyens de chauffage rapide qui permettent de chauffer le matériau non seulement en surface mais également à cœur. La contrainte mécanique des calandres couplée à ces moyens de chauffage rapide, permet d'éliminer la présence de porosités et de répartir de manière homogène le polymère, notamment lorsque le matériau fibreux est un matériau dit « prêt à l'emploi ».

De manière avantageuse ce calandrage à chaud permet non seulement de chauffer le polymère d'imprégnation pour qu'il pénètre, adhère et recouvre de manière uniforme les fibres, mais aussi de contrôler l'épaisseur et la largeur du ou des rubans de matériau fibreux pré-imprégné.

Pour pouvoir réaliser une pluralité de rubans parallèles unidirectionnels, c'est-à-dire autant de rubans que de mèches parallèles pré-imprégnées, passées dans le lit fluidisé, les calandres chauffantes, référencées 51, 52, 53 sur le schéma de la Figure 1, comprennent avantageusement une pluralité de gorges de calandrage, en conformité avec le nombre de rubans. Ce nombre de gorges peut par exemple aller jusqu'à 200. Un système asservi SYST permet en outre de réguler la pression et/ou l'écartement E entre les rouleaux 71, 75 de la calandre 70, de manière à contrôler l'épaisseur ep des rubans. Une telle calandre 70 est schématisée sur la Figure 2 décrite ci-dessous.

Le dispositif de calandrage comprend au moins une calandre chauffante 51. De préférence, il comprend plusieurs calandres chauffantes 51, 52, 53 montées en série. Le fait d'avoir plusieurs calandres en série permet de tasser les porosités dans le matériau et de diminuer leur taux. Cette pluralité de calandres est donc importante lorsque l'on souhaite réaliser des matériaux fibreux dits « prêts à l'emploi ». En revanche, pour fabriquer des matériaux fibreux dits « secs » on peut se contenter d'un nombre de calandres inférieur, voire d'une seule calandre.

De manière avantageuse chaque calandre du dispositif de calandrage dispose d'un système de chauffage intégré par induction ou par microondes, de préférence par microondes, afin de chauffer le polymère ou mélange de polymères thermoplastiques. De manière avantageuse, lorsque le polymère ou mélange de polymères comprend des charges carbonées, telles que du noir de carbone ou des nanocharges carbonées, de préférence choisies parmi des nanocharges carbonées, en particulier des graphènes et/ou des nanotubes de carbone et/ou des nanofibrilles de carbone ou leurs mélanges, l'effet de chauffage par induction ou par microondes est amplifié par la présence de ces charges qui conduisent alors la chaleur jusqu'au cœur du matériau.

De manière avantageuse, chaque calandre 51, 52, 53 du dispositif est couplée à un dispositif de chauffage rapide 41, 42, 43, situé avant et/ou après chaque calandre, afin de transmettre rapidement de l'énergie thermique au matériau et de parfaire l'imprégnation des fibres par le polymère fondu. Le dispositif de chauffage rapide peut par exemple être choisi parmi les dispositifs suivants : un dispositif microondes ou d'induction, un dispositif infrarouge IR ou laser ou un autre dispositif permettant un contact direct à la source de chaleur tel qu'un dispositif à flamme. Un dispositif microondes ou par induction est très avantageux, en particulier lorsqu'il est couplé à la présence de nanocharges carbonées dans le polymère ou mélange de polymères puisque les nanocharges carbonées amplifient l'effet de chauffage et le transmettent jusqu'au cœur du matériau.

Selon une variante de réalisation, il est en outre possible de combiner plusieurs de ces dispositifs de chauffage.

Le procédé peut en outre comprendre une étape de chauffage des mèches des fibres, avant ladite imprégnation avec, comme moyen de chauffage préféré, le chauffage par micro-ondes comme pour le système de chauffage de ladite calandre chauffante.

De manière facultative, une étape ultérieure consiste à bobiner le ou les rubans pré-imprégnés et mis en forme. Pour cela, l'unité 100 de mise en œuvre du procédé comprend un dispositif d'embobinage 60 comportant autant de bobines 61 que de rubans, une bobine 61 étant affectée à chaque ruban. Un répartiteur 62 est en général prévu pour dévier les rubans pré-imprégnés vers leurs bobines 61 respectives, tout en évitant que les rubans se touchent afin d'éviter toute dégradation.

La Figure 2 schématise le détail des gorges 73 d'une calandre 70 vue en coupe. Une calandre 70 comprend un rouleau supérieur 71 et un rouleau inférieur 75. Un des rouleaux, par exemple le rouleau supérieur 71, comprend une partie crénelée 72, tandis que l'autre rouleau, c'est-à-dire le rouleau inférieur 75 dans l'exemple, comprend une partie rainurée 76, la forme des rainures étant complémentaire de la forme des parties en saillie 72 du rouleau supérieur. L'écartement E entre les rouleaux 71, 75 et/ou la pression exercée par les deux rouleaux l'un contre l'autre, permet de définir les dimensions des gorges 73, et notamment leur épaisseur ep et de largeur l. Chaque gorge 73 est prévue pour y loger une mèche de fibres qui est alors pressée et chauffée entre les rouleaux. Les mèches se transforment alors en rubans unidirectionnels parallèles dont l'épaisseur et la largeur sont calibrées par les gorges 73 des calandres. Chaque calandre comprend avantageusement une pluralité de gorges dont le nombre peut aller jusqu'à 200, de manière à réaliser autant de rubans qu'il y a de gorges et de mèches pré-imprégnées. Le dispositif de calandrage comprend en outre un dispositif central, référencé SYST sur la Figure 1, piloté par un programme d'ordinateur prévu à cet effet, qui permet de réguler simultanément la pression et/ou l'écartement des rouleaux de calandrage de toutes les calandres de l'unité 100.

Le ou les ruban(s) unidirectionnel(s) ainsi fabriqué(s) présente(nt) une largeur l et une épaisseur ep adaptées pour une dépose par robot dans la fabrication de pièces en trois dimensions, sans besoin de refendage. La largeur du ou des ruban(s) est avantageusement comprise entre 5 et 100mm, de préférence entre 5 et 50mm, et de manière encore plus préférée entre 5 et 10mm.

Le procédé de fabrication d'un matériau fibreux pré-imprégné qui vient d'être décrit permet donc de réaliser des matériaux fibreux pré-imprégnés avec une grande productivité, tout en permettant une imprégnation homogène des fibres et le contrôle et la reproductibilité de la porosité, et ainsi le contrôle et reproductibilité des performances de l'article composite final visé. L'imprégnation homogène autour des fibres et l'absence de porosités sont assurées par l'étape d'imprégnation sur lit fluidisé couplée à l'utilisation d'un dispositif de mise en forme sous contrainte mécanique, lui-même couplé à des systèmes de chauffage rapide qui permettent de chauffer la matière en surface mais aussi à cœur. Les matériaux obtenus sont des produits semi-finis sous forme de rubans calibrés en épaisseur et en largeur et qui sont utilisés pour la fabrication de pièces de structure en trois dimensions dans les secteurs des transports comme l' automobile, l'aéronautique civile ou militaire, le nautique, ou le ferroviaire, des énergies renouvelables, en particulier éolienne, hydrolienne, les dispositifs de stockage d'énergie, les panneaux solaires ; des panneaux de protection thermique ; des sports et loisirs, de la santé et du médical, de l'armement et de la balistique (pièces pour arme ou missile), de la sécurité, par un procédé pouvant être de la dépose de bandes assistée par une tête de robot par exemple, et connu sous le nom de procédé AFP (de l'acronyme anglais « Automatic Fiber Placement »).

Ce procédé permet donc de fabriquer en continu des rubans de dimensions calibrées et de grande longueur, si bien qu'il permet d'éviter des étapes de refendage et de raboutage coûteuses et préjudiciables à la qualité des pièces composites fabriquées ultérieurement. L'économie liée à la suppression de l'étape de refendage représente environ 30-40% du coût total de la production d'un ruban de matériau fibreux pré-imprégné.

L'association des dispositifs de chauffages rapide aux calandres chauffantes facilite la mise en forme des rubans aux dimensions souhaitées et permet d'augmenter de manière significative la cadence de production de ces rubans par rapport à des procédés conventionnels de mise en forme. De plus, cette association permet de densifier le matériau en supprimant totalement les porosités dans les matériaux fibreux dits « prêts à l'emploi ».

Les dispositifs de chauffage rapide permettent en outre l'utilisation de nombreux grades de polymères, même les plus visqueux, ce qui permet de couvrir toutes les gammes de résistance mécanique souhaitées.

Pour la fabrication spécifique de rubans de matériaux fibreux dits « secs », l'étape d'imprégnation en lit fluidisé permet d'obtenir un grammage de polymères réparti de manière homogène contrôlée et reproductible, avec un taux préférentiel de polymère déposé de l'ordre de 5 à 7 g/m.

Le procédé permet donc de réaliser des rubans calibrés de matériau fibreux pré-imprégné adaptés à la fabrication de pièces composites en trois dimensions, par dépose automatique desdits rubans au moyen d'un robot.

Les exemples suivants illustrent de façon non limitative la portée de l'invention.

### Exemples :

### Exemple 1 :

Une mèche de fibre de verre, de 1200 tex, a été plongée dans un lit de poudre fluidisé, composé d'une poudre de polyamide PA11, présentant une granulométrie de 100µm en moyenne. La poudre de PA11 a préalablement été mélangée à sec avec 0.2% (en poids) d'une poudre de noir de carbone d'une granulométrie de 50µm.

En sortie du lit fluidisé, la mèche de fibres de verre a été chauffé jusqu'à la température de ramollissement du polymère (150°C) pour fixer la poudre sur les fibres de verre. Le procédé d'imprégnation permet une imprégnation à cœur des mèches de fibres. La force appliquée sur la mèche est faible et juste suffisante à tendre la mèche de fibre.

Avant l'introduction dans la calandre, la mèche pré-imprégnée de poudre est réchauffée au moyen d'un four à infrarouge (IR), jusqu'à la fusion du polymère puis il est introduit dans une calandre chauffante dont la température de paroi (i.e. la température de la surface de la partie crénelée et de la partie rainurée) est portée à 110°C. La vitesse de passage dans le lit fluidisé et dans la calandre est la même car la mèche est sous tension et les deux équipements sont en série. La vitesse linéaire de la mèche est de 20m/mn. La calandre se caractérise essentiellement par une gorge de largeur 6,35 mm dans laquelle une partie crénelée vient s'insérer, sous pression. La pression est contrôlée par un dispositif adapté et est maintenue constante, égale à 5 bars, tout au long de l'essai de calandrage.

### Résultats :

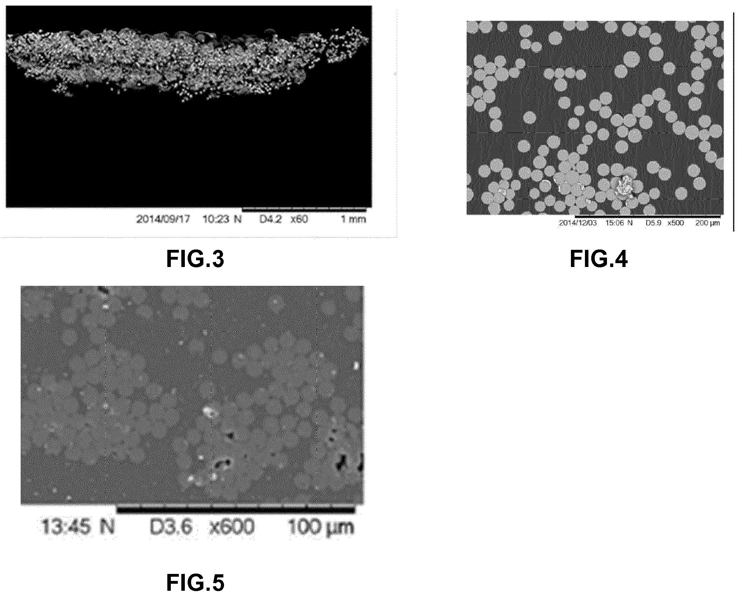

La photo de la Figure 3, prise au microscope électronique à balayage MEB, montre une vue en coupe de la mèche de fibres de verre pré-imprégnées, avant calandrage. On observe que la poudre de polymère est bien présente au cœur de la mèche de fibres, ce qui prouve l'efficacité du mode d'imprégnation en lit fluidisé. Les grains de poudres sont encore visibles même après la phase de fixation par ramollissement du polymère.

On donne dans le tableau 1, ci-dessous, les mesures de largeur réalisées sur un prélèvement de 30 échantillons représentatifs de la mèche pré-imprégnées avant calandrage. On observe que la largeur de la mèche est assez variable, avec un minimum de 1.26 mm et un maximum de 4.54 mm.

**Tableau 1 : mesures de largeurs d'un échantillon représentatif de la mèche pré-imprégnée, avant calandrage.**

| | Largeur (mm) |
|---|---|
| Mini | 1,26 |
| Maxi | 4,54 |
| Moyenne | 2,98 |
| Ecart-type | 0,77 |

On donne dans le tableau 2, ci-dessous, les mesures de largeur réalisées sur un prélèvement de 30 échantillons représentatifs du ruban après calandrage. On observe que la variation de largueur de la mèche est beaucoup plus faible que dans le cas de la mèche pré imprégnée avant calandrage, avec un minimum de 5.01 mm et un maximum de 6,85. On observe également que la valeur moyenne du ruban calandré est nettement supérieure à celle de la mèche pré-imprégnée, avant calandrage (2,98 mm contre 6,19) et est proche de la cible visée de 6,35mm (taille de la gorge de la calandre), ce qui montre l'efficacité du calandrage pour finir la fabrication du ruban composite après la phase de pré imprégnation de la mèche de fibres de verre.

**Tableau 2 : mesures de largeurs d'un échantillon représentatif du ruban calandré à partir de la mèche de fibres de verre de 1200 Tex, pré-imprégnée par la poudre de PA11.**

| | Largeur (mm) |
|---|---|
| Mini | 5,01 |
| Maxi | 6,85 |
| Moyenne | 6,19 |
| Ecart-type | 0,34 |

La Figure 4, représente une vue en coupe du ruban composite après calandrage, observé par microscopie électronique à balayage, après une préparation de la surface par polissage, en suivant les règles de l'art. On observe que les grains de poudre de PA11 ont disparu, laissant place à une matrice polymérique homogène du composite, présentant peu de porosité. Cela prouve que le calandrage a permis de fondre la poudre et de consolider le ruban composite, comme on le souhaitait.

Cet exemple démontre l'efficacité du procédé d'imprégnation par une poudre sèche en lit fluidisé en association avec le calandrage, pour obtenir un ruban composite unidirectionnel (UD) à base de fibre de verre, imprégné d'une matrice thermoplastique et faisant une largeur de 6,35 mm (¼ de pouce), sans avoir recours au refendage d'une nappe composite unidirectionnel.

### Exemple 2

Les conditions opératoires sont identiques à l'exemple 1. La granulométrie de la poudre de PA11 est différente (30µm en moyenne contre 100µm dans le cas de l'exemple 1). Dans cet exemple on a utilisé des fibres de carbone constituées en mèche de 12K. La Figure 5 représente une vue en coupe du ruban composite obtenu, après calandrage, observé au microscope électronique à balayage (MEB). Comme dans l'exemple 1, les grains de poudre ont fondu pour faire place à une matrice polymère du ruban composite, qui est homogène et peu poreuse.

Les mesures de largeur du ruban composite calandré sont données dans le tableau 3, suivant le même protocole de mesure que dans l'exemple 1.

**Tableau 3 : mesures de largeurs d'un échantillon représentatif du ruban calandré à partir de la mèche de fibres de carbone de 12K pré-imprégnée par la poudre de PA11.**

| | Largeur (mm) |
|---|---|
| Mini | 6,00 |
| Maxi | 6,75 |
| Moyenne | 6,36 |
| Ecart-type | 0,13 |

Cela démontre l'efficacité du procédé d'imprégnation par une poudre sèche en lit fluidisé en association avec le calandrage, pour obtenir un ruban composite unidirectionnel (UD) à base de fibre de carbone, imprégné d'une matrice thermoplastique et faisant une largeur de 6,35 mm (¼ de pouce), sans avoir recours au refendage d'une nappe composite unidirectionnelle.

## Revendications

1. Procédé de fabrication d'un matériau fibreux pré-imprégné comprenant un matériau fibreux en fibres continues et une matrice polymère thermoplastique, **caractérisé en ce que** ledit matériau fibreux pré-imprégné est réalisé en une pluralité de rubans parallèles unidirectionnels et **en ce que** ledit procédé comprend les étapes suivantes :
i) imprégnation dudit matériau fibreux se présentant sous forme de plusieurs mèches parallèles et sans contact les unes avec les autres, par ledit polymère thermoplastique ou un mélange de polymères thermoplastiques se présentant sous forme d'une poudre en lit fluidisé (22), ledit polymère thermoplastique ou mélange de polymères thermoplastiques comprenant en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges ;
ii) mise en forme desdites mèches parallèles dudit matériau fibreux imprégné selon l'étape i), par calandrage au moyen d'au moins une calandre (51, 52, 53) chauffante sous forme d'une pluralité de rubans parallèles unidirectionnels avec ladite calandre chauffante comportant une pluralité de gorges (73) de calandrage, de préférence jusqu'à 200 gorges de calandrage, en conformité avec le nombre desdits rubans, et comprenant en outre un système de chauffage intégré par induction ou par microondes, de préférence par microondes, couplé à la présence de charges carbonées dans ledit polymère thermoplastique ou mélange de polymères thermoplastiques et avec une pression et/ou un écartement entre les rouleaux de ladite calandre régulé par un système asservi.

2. Procédé selon la revendication 1, **caractérisé en ce que** ladite étape d'imprégnation i) est complétée par une étape de recouvrement de ladite pluralité de mèches parallèles après imprégnation par la poudre selon l'étape i), par un polymère thermoplastique fondu, pouvant être identique ou différent dudit polymère sous forme de poudre en lit fluidisé, ladite étape de recouvrement étant réalisée avant ladite étape de calandrage ii), ledit polymère fondu étant de préférence de même nature que ledit polymère sous forme de poudre en lit fluidisé, de préférence avec ledit recouvrement s'effectuant par extrusion (30) en tête d'équerre par rapport à ladite pluralité de mèches parallèles.

3. Procédé selon l'une des revendications 1 à 2, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de sisal, de soie, ou cellulosiques en particulier de viscose, ou les fibres thermoplastiques de température de transition vitreuse Tg supérieure à la Tg dudit polymère ou dudit mélange de polymères lorsque ce-dernier est amorphe ou de température de fusion Tf supérieure à la Tf dudit polymère ou dudit mélange de polymères lorsque ce-dernier est semi-cristallin, ou un mélange de deux ou de plusieurs desdites fibres, de préférence un mélange de fibres de carbone, de verre ou de carbure de silicium, en particulier des fibres de carbone.

4. Procédé selon l'une des revendications 1 à 3, **caractérisé en ce que** le taux en volume dudit polymère ou mélange de polymères par rapport audit matériau fibreux varie de 40 à 250% de préférence de 45 à 125 % et plus préférentiellement de 45 à 80%.

5. Procédé selon l'une des revendications 1 à 3, **caractérisé en ce que** le taux en volume dudit polymère ou dudit mélange de polymères par rapport audit matériau fibreux varie de 0,2 et 15 %, de préférence entre 0,2 et 10% et plus préférentiellement de 0,2 et 5%.

6. Procédé selon l'une des revendications 1 à 5, **caractérisé en ce que** ladite (ou lesdites) calandre(s) chauffante(s) de l'étape ii) est (sont) couplée(s) à un dispositif de chauffage complémentaire rapide (41, 42, 43), situé avant et/ou après ladite (chaque) calandre (51, 52, 53), en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme.

7. Unité de mise en œuvre du procédé tel que défini selon l'une des revendications 1 à 6, **caractérisé en ce qu'**elle comprend :
a) un dispositif d'imprégnation en continu d'une pluralité de mèches parallèles de matériau fibreux et sans contact les unes avec les autres, comprenant une cuve (20) de lit fluidisé (22) pour polymère en poudre,
b) un dispositif de calandrage en continu desdites mèches parallèles, avec mise en forme, sous forme de plusieurs rubans parallèles unidirectionnels, comprenant :
b1) au moins une calandre (51, 52, 53) chauffante, en particulier plusieurs calandres chauffantes en série, ladite calandre portant plusieurs gorges de calandrage, et de préférence ayant jusqu'à 200 gorges (73) de calandrage, et comprenant en outre un système de chauffage intégré par induction ou par microondes, de préférence par microondes, couplé à la présence de charges carbonées dans ledit polymère thermoplastique ou mélange de polymères thermoplastiques,
b2) un système de régulation de la pression et/ou de l'écartement entre rouleaux (71, 75) de calandrage.

8. Unité selon la revendication 7, **caractérisée en ce que** ledit dispositif d'imprégnation comprend en plus et à la suite de ladite cuve de lit fluidisé, un dispositif de recouvrement ou desdites mèches imprégnées selon étape i), par un polymère fondu, de préférence ledit dispositif de recouvrement comprenant un dispositif (30) d'extrusion en tête d'équerre par rapport auxdites mèches parallèles.

9. Unité selon l'une des revendications 7 à 8, **caractérisée en ce que** ladite (lesdites) calandre(s) chauffante(s) est (sont) couplée(s) à un dispositif complémentaire de chauffage rapide (41, 42, 43), situé avant et/ou après ladite (chaque) calandre, ledit dispositif de chauffage rapide étant choisi parmi un dispositif microondes ou d'induction en particulier lorsqu'il est couplé à la présence de charges carbonées, ou un dispositif IR ou Laser ou un autre dispositif permettant un contact direct à la source de chaleur, tel qu'un dispositif à flamme.

## Patentansprüche

1. Herstellungsverfahren eines vorimprägnierten Fasermaterials, das ein Endlosfaser-Fasermaterial und eine thermoplastische Polymermatrix umfasst, **dadurch gekennzeichnet, dass** das vorimprägnierte Fasermaterial aus einer Vielzahl von unidirektionalen parallelen Bändern hergestellt wird und dass das Verfahren die folgenden Schritte umfasst:
i) Imprägnieren des Fasermaterials in Form mehrerer paralleler Stränge und ohne Kontakt zueinander durch das thermoplastische Polymer oder eine Mischung aus thermoplastischen Polymeren in Form eines Wirbelschichtpulvers (22), wobei das thermoplastische Polymer oder die Mischung aus thermoplastischen Polymeren ferner kohlenstoffhaltige Füllstoffe, insbesondere Ruß oder kohlenstoffhaltige Nanofüllstoffe, vorzugsweise gewählt aus kohlenstoffhaltigen Nanofüllstoffen, besonders Graphenen und/oder Kohlenstoff-Nanoröhren und/oder Kohlenstoff-Nanofibrillen oder Mischungen davon, umfasst;
ii) Formgeben der parallelen Stränge des gemäß Schritt i) imprägnierten Fasermaterials durch Kalandrieren mit Hilfe mindestens eines wärmenden Kalanders (51, 52, 53) in Form einer Vielzahl von unidirektionalen parallelen Bändern, wobei der wärmende Kalander eine Vielzahl von Kalandernuten (73), vorzugsweise bis zu 200 Kalandernuten, aufweist, entsprechend der Anzahl der Bänder, und ferner ein integriertes Erwärmungssystem durch Induktion oder Mikrowellen, vorzugsweise Mikrowellen, umfasst, das an das Vorhandensein von kohlenstoffhaltigen Füllstoffen in dem thermoplastischen Polymer oder Mischung aus thermoplastischen Polymeren gekoppelt ist und mit einem Druck und/oder einem Abstand zwischen den Kalanderwalzen durch ein Servosystem reguliert wird.

2. Verfahren nach Anspruch 1, **dadurch gekennzeichnet, dass** der Imprägnierungsschritt i) durch einen Schritt des Beschichtens der Vielzahl von parallelen Stränge nach der Imprägnierung mit dem Pulver gemäß Schritt i) mit einem geschmolzenen thermoplastischen Polymer, das mit dem Polymer in Form von Wirbelschichtpulver identisch oder davon verschieden sein kann, vervollständigt wird, wobei der Beschichtungsschritt vor dem Kalandrierschritt ii) durchgeführt wird, wobei das geschmolzene Polymer vorzugsweise von der gleichen Art wie das Polymer in Form von Wirbelschichtpulver ist, wobei das Beschichten vorzugsweise durch Extrusion (30) mit Querspritzkopf in Bezug auf die Vielzahl von parallelen Strängen durchgeführt wird.

3. Verfahren nach einem der Ansprüche 1 bis 2, **dadurch gekennzeichnet, dass** das Fasermaterial Endlosfasern umfasst, gewählt aus Kohlenstoff-, Glas-, Siliciumcarbid-, Basalt-, Siliciumdioxidfasern, Naturfasern, besonders aus Leinen oder Hanf, Lignin, Sisal, Seide oder cellulosischen, besonders Viskose, oder thermoplastischen Fasern mit einer Glasübergangstemperatur Tg höher als die Tg des Polymers oder der Mischung aus Polymeren, wenn letzteres amorph ist, oder mit einer Schmelztemperatur Tf höher als die Tf des Polymers oder der Mischung aus Polymeren, wenn letzteres halbkristallin ist, oder einer Mischung aus zwei oder mehreren der Fasern, vorzugsweise einer Mischung aus Kohlenstoff-, Glas- oder Siliciumcarbidfasern, besonders Kohlenstofffasern.

4. Verfahren nach einem der Ansprüche 1 bis 3, **dadurch gekennzeichnet, dass** der Volumengehalt des Polymers oder der Mischung aus Polymeren in Bezug auf das Fasermaterial von 40 bis 250 %, vorzugsweise von 45 bis 125 % und noch bevorzugter von 45 bis 80 % schwankt.

5. Verfahren nach einem der Ansprüche 1 bis 3, **dadurch gekennzeichnet, dass** der Volumengehalt des Polymers oder der Mischung aus Polymeren in Bezug auf das Fasermaterial von 0,2 bis 15 %, vorzugsweise zwischen 0,2 und 10 % und noch bevorzugter von 0,2 bis 5 % schwankt.

6. Verfahren nach einem der Ansprüche 1 bis 5, **dadurch gekennzeichnet, dass** der (oder die) wärmende(n) Kalander von Schritt ii) mit einer zusätzlichen Schnellerwärmungsvorrichtung (41, 42, 43) gekoppelt ist/sind, die sich vor und/oder nach dem (jedem) Kalander (51, 52, 53) befindet, besonders eine Erwärmungsvorrichtung durch Mikrowellen oder Induktion, gekoppelt an das Vorhandensein von kohlenstoffhaltigen Füllstoffen in dem Polymer oder in der Mischung aus Polymeren, oder eine Infrarot- (IR) oder Laser-Erwärmungsvorrichtung, oder durch Direktkontakt mit einer anderen Wärmequelle wie einer Flamme.

7. Einheit zur Durchführung des Verfahrens nach einem der Ansprüche 1 bis 6, **dadurch gekennzeichnet, dass** sie Folgendes umfasst:
a) eine Vorrichtung zum kontinuierlichen Imprägnieren einer Vielzahl von parallelen Strängen aus Fasermaterial ohne Kontakt zueinander, umfassend einen Eintauchbehälter (20) mit Wirbelschicht (22) für pulverförmiges Polymer,
b) eine Vorrichtung zum kontinuierlichen Kalandrieren der parallelen Stränge mit einer Formgebung in Form mehrerer unidirektionaler paralleler Bänder, umfassend:
b1) mindestens einen wärmenden Kalander (51, 52, 53), besonders mehrere wärmende Kalander in Reihe, wobei der Kalander mehrere Kalandernuten trägt und vorzugsweise bis zu 200 Kalandernuten (73) aufweist, und ferner umfassend ein integriertes Erwärmungssystem durch Induktion oder Mikrowellen, vorzugsweise Mikrowellen, das an das Vorhandensein von kohlenstoffhaltigen Füllstoffen in dem thermoplastischen Polymer oder Mischung aus thermoplastischen Polymeren gekoppelt ist,
b2) ein System zur Regulierung des Drucks und/oder Abstands zwischen Kalanderwalzen (71, 75).

8. Einheit nach Anspruch 7, **dadurch gekennzeichnet, dass** die Imprägniervorrichtung zusätzlich und nach dem Eintauchbehälter mit Wirbelschicht eine Beschichtungsvorrichtung imprägnierte Stränge gemäß Schritt i) mit einem geschmolzenen Polymer umfasst, wobei die Beschichtungsvorrichtung vorzugsweise eine Extrusionsvorrichtung (30) mit Querspritzkopf in Bezug auf die parallelen Stränge umfasst.

9. Einheit nach einem der Ansprüche 7 bis 8, **dadurch gekennzeichnet, dass** der (die) wärmende(n) Kalander an eine komplementäre Schnellerwärmungsvorrichtung (41, 42, 43) gekoppelt ist (sind), die sich vor und/oder nach dem (jedem) Kalander befindet, wobei die Schnellerwärmungsvorrichtung aus einer Mikrowellen- oder Induktionsvorrichtung gewählt ist, besonders, wenn es an das Vorhandensein von kohlenstoffhaltigen Füllstoffen gekoppelt ist, oder einer Infrarot-(IR) oder Laservorrichtung oder einer anderen Vorrichtung, die einen Direktkontakt mit der Wärmequelle wie eine Flamme erlaubt.

## Claims

1. Method for producing a preimpregnated fibrous material comprising a fibrous material made from continuous fibers and a thermoplastic polymer matrix, **characterized in that** said preimpregnated fibrous material is produced as a plurality of unidirectional parallel ribbons and **in that** said method comprises the following steps:
i) impregnation of said fibrous material presented in the form of multiple parallel rovings and without them coming in contact with each other, by said thermoplastic polymer or a blend of thermoplastic polymers presented in the form of a powder in a fluidized bed (22), said thermoplastic polymer or blend of thermoplastic polymers further comprising carbonaceous fillers, in particular carbon black or carbonaceous nanofillers, preferably selected from among carbonaceous nanofillers, in particular graphenes and/or carbon nanotubes and/or carbon nanofibrils or their blends;
ii) forming of said parallel rovings of said impregnated fibrous material according to step i), by calendering by means of at least one heating calender (51, 52, 53) in the form of a plurality of unidirectional parallel ribbons with said heating calender including a plurality of calendering grooves (73), preferably up to 200 calendering grooves, in accordance with the number of said ribbons, and further comprising an integrated induction or microwave heating system, preferably by microwave, coupled with the presence of carbonaceous fillers in said thermoplastic polymer or in said mixture of thermoplastic polymers and with a pressure and/or spacing between the rolls of said calender regulated by a closed-loop control system.

2. Method according to claim 1, **characterized in that** said impregnation step i) is completed by a step to cover said multiple parallel rovings after impregnation by the powder according to step i), by a melted thermoplastic polymer, which can be identical to or different than said polymer in the form of powder in a fluidized bed, said coverage step being carried out before said calendering step ii), said melted polymer being preferably of the same nature as said polymer in the form of powder in a fluidized bed, preferably with said coverage being carried out in crosshead extrusion (30) in relation to said multiple parallel rovings.

3. Method according to one of claims 1 to 2, **characterized in that** said fibrous material comprises continuous fibers selected from carbon, glass, silicon carbide, basalt, silica, natural fibers especially flax or hemp, sisal, silk, or cellulose in particular viscose, or thermoplastic fibers with a glass transition temperature Tg greater than the Tg of said polymer or said polymer mixture when the latter is amorphous or a fusion temperature Tf greater than the Tf of said polymer or said polymer mixture when the latter is semi-crystalline, or a mixture of two or more of said fibers, preferably a mixture of carbon, glass or silicon carbide fibers, in particular carbon fibers.

4. Method according to one of claims 1 to 3, **characterized in that** the volume rate of said polymer or mixture of polymers in relation to said fibrous material varies from 40 to 250%, preferably from 45 to 125% and more preferably from 45 to 80%.

5. Method according to one of claims 1 to 3, **characterized in that** the volume rate of said polymer or mixture of polymers in relation to said fibrous material varies from 0.2 to 15%, preferably between 0.2 and 10% and more preferably from 0.2 to 5%.

6. Method according to one of claims 1 to 5, **characterized in that** said heating calender(s) in step ii) is (are) coupled to a complementary rapid heating device (41, 42, 43), located before and/or after said (each) calender (51, 52, 53), in particular a microwave or induction heating device coupled with the presence of carbonaceous fillers in said polymer or in said mixture of polymers, or an infrared IR or laser heating device, or a device for heating by direct contact with another source of heat such as a flame.

7. Unit for implementing the method as defined by one of claims 1 to 6, **characterized in that** it comprises:
a) a device for continuously impregnating a plurality of parallel rovings of fibrous material and without them coming in contact with each other, comprising a vessel (20) with a fluidized bed (22) for a powdered polymer,
b) a device for continuously calendering said parallel rovings, in addition to forming into multiple unidirectional parallel ribbons, comprising:
b1) at least one heating calender (51, 52, 53), in particular several heating calenders in series, said calender having multiple calendering grooves, and preferably up to 200 calendering grooves (73), and further comprising an integrated induction or microwave heating system, preferably by microwave, coupled with the presence of carbonaceous fillers in said thermoplastic polymer or in said mixture of thermoplastic polymers,
b2) a system for regulating the pressure and/or spacing between calendering rolls (71, 75).

8. Unit according to claim 7, **characterized in that** said impregnation device also comprises and after said fluidized bed vessel, a device for covering said rovings impregnated according to step i), by a melted polymer, this coverage device preferably comprising a crosshead extrusion device (30) in relation to said parallel rovings.

9. Unit according to one of claims 7 to 8, **characterized in that** said heating calender(s) is (are) coupled to a complementary rapid heating device (41, 42, 43), located before and/or after said (each) calender, said rapid heating device being selected from a microwave or induction device in particular when it is coupled with the presence of carbonaceous fillers, or an IR or Laser device or any other device enabling direct contact with the heat source, such as a flame device.
